# EUROPEAN PATENT APPLICATION

(11) **EP 1 022 084 A2**
(43) Date of publication of application: **26.07.2000**
(21) Application number: 00100927.3
(22) Date of filing: 18.01.2000
(51) Int. Cl.: B23K 7/10

(54) **Under-board follow-up fume collection system**

(30) Priority: 21.01.1999 CN 99225517 U
(71) Applicant: Messer Cutting & Wleding Co., Ltd. (Kunsham), Kunshan City, 215300, RC - Jiangsu Province (CN)
(72) Inventor: Fenner, Burkhard, 61169 Friedberg (DE)
(74) Representative: Berdux, Klaus, Dipl.-Ing.

(57) **Abstract**

This on-board type fume extractor system is mainly used for plate cutting field. Flame and plasma cutting will create huge harmful fume to people's health and environment. In order to extract harmful fume created during cutting process, this system is invented to protect people's health and environment. This on-board system consists of longitudinal track, moving carriage, fan and motor, driving system, filter cartridge, slag collector, fume dust collector, filter element purge unit, shock proof platform and electrical control components. Whole fume extractor system will be mounted on a special carriage which can move along the longitudinal track and will be synchronized with main cutting machine. The extractor inlet hoods is directly under cutting torches for the most efficient extraction result. By this on-board type fume extracting system, good extraction results can be achieved throughout the very big working area of this machine.

## Description

Flame / Plasma cutting machines will produce large quantities of no xions and harmful fumes when it' s cutting metal, polluting the environment and damaging the health of the body. Under-board Follow-up Fume Collection System is a new type of system. It collects powder, dust and cross effectively during cutting, and automatically follow the cutting machine.

The description of the Under-board Follow-up Fume Collection System is as follows: set of rails known as the longitudinal track with a motorized platform setting on the rails. The platform has a set of funnel lines to catch slag and heavies than air particles and an exhaust fan to draw all flames into the lines. Filters are located on the platform to trap the particles that do not fall to the bottom of the lines. The platform also has a muffler and a holdback filter cleaning system. The control has two modes manual and automatic and synchronizer movement of die platform with the machine above by encoder Signal from both machine.

Under-board Follow-up Fume Collection System is used when cutting metal plate with either a flame cutting machine or a plasma cutting machine, installed under the cutting table and system, synchronizes with the main cutting machine, so the exhaust entrance is always under the cutting torch, accordingly the dust and dross is collected effectively. The system use multinomial automatic checking control technology, using the encoder pulse signal of plasma cutting machine' s main drive and platforms' drive to achieve synchronous running of Under-board Follow-up Fume System and cutting machine.

Using the Under-board Follow-up Fume System will protect the working environment and the safety of operator by the filtering of the pollutants caused from the cutting of the metal plate.

The following explanation of the Under-board Follow-up Fume Collection System is linked with the attached drawing.
- Drawing 1 :: Structure drawing of Under-board Follow-up Fume Collection System
- Drawing 2 :: Vertical view of the system
- Drawing 3 :: Dust Collection System
- Drawing 4 :: Right side view of Dust Collection System
- Drawing 5 :: The system working with a plasma cutting machine
- Drawing 6 :: Electric control drawing of Under-board Follow-up Fume Collection System

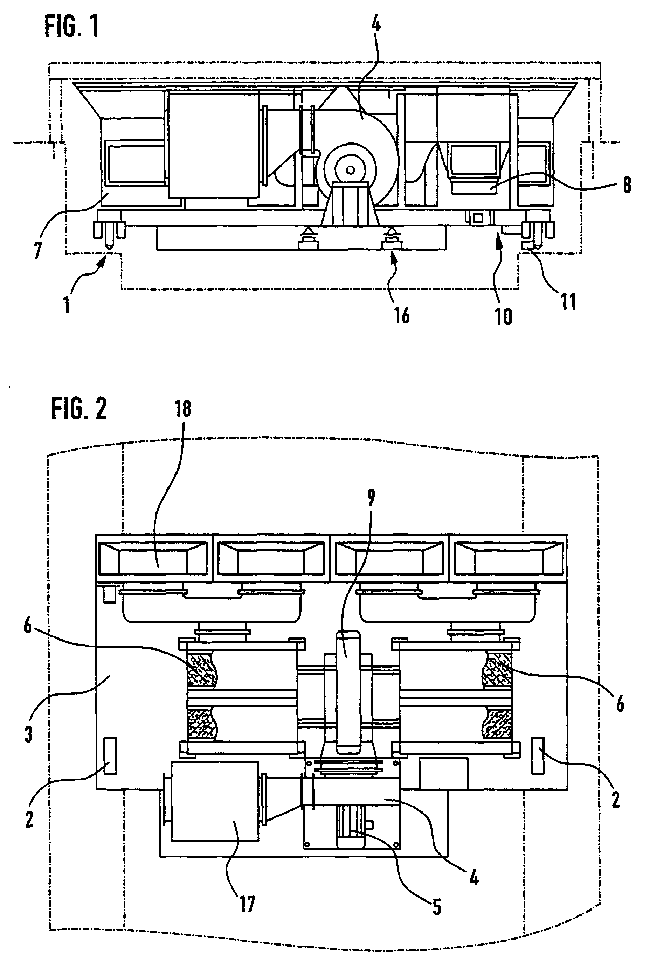

See attached drawing 1 and drawing 2, Under-board Follow-up Fume Collection System includes the longitudinal track (1) which is set on the bottom, plantform (3) with drive wheel(2) which is set on the longitudinal track (1), exhaust fan (4) and electromotor (5) and gearbox which is installed on the platform (3), filters (6) located on the two sides of the plantform (3), dross*¹ collector(7) and dust collector(8) which installed on the plantform (3), blowback system (9) for removing powder dust from the inside of filter (6) which consists of a heavy-fisted pump and movitoring equipment, drive equipment (10) for moving platform (3), synchronizer(11) and control cabinet (12).
*1 dross slag collector

Longitudinal track (1) is two parallel tracks. The plantform (3) runs on the longitudinal track (1), controlled by drive system (10) using an electric motor and gear electromotion and reducer.

Before starting the cutting, start the exhaust fan (4), the powder dust which is produced during the cutting is then sucked into filter (6). The inside of filter (6) has filter canister, the powder dust is collected on the outside of filter, the depurative air then enters the atmosphere directly via the exhaust fan (4). Because the torch of the cutting machine can move in both X, Y directions, its location is constantly changing to keep the exhaust entrance under the cutting torch, this system moves along with the changing of the cutting machine' s location (13), allowing the powder dust and dross to enter into this system on the time. No. 18 of Drawing 2 is exhaust duct entrance.

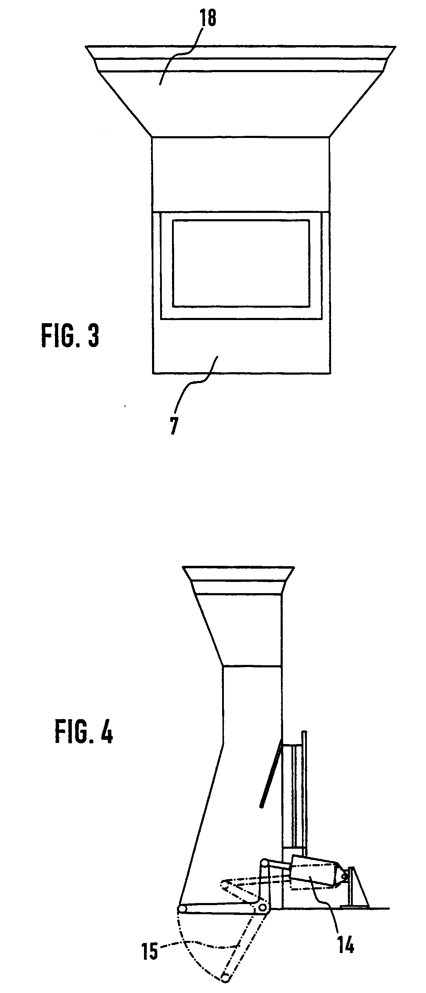

Refer to the attached drawing 3 and 4, due to the weight of dross, there is trough system which consists of a cylinder (14), actuator and door(15) under the collection actuator (15), funnel (7), door(15) is opened or closed via cylinder (14), so the dross will not be sucked into filter (6) to cause the filter to be jammed, the dross will simply fall into the bottom of collection funnel (7) directly.

During cutting, the powder dust is light, so it is drawn into the filter duct(6) directly, then the dust is collected on the outside of the filter canister as more and more is collected, resistance will be increased accordingly, when the the pressure reaches a set parameter, then the reverse blowback system (9) will shoot pulses of compressed air to the outside of filter from the inside of filter, and blow the powder dust off the filter. Allowing the duct to fall into the collection system (8) directly, cleaning the filter and extending the life of the filter.

After a period time of cutting large quantities of dust and dross have gathered on the bottom of the bin, then the platform (3) can be ran manually to the end of longitudinal track (1), simply onpen the doors at the bottom of collection system for dust (8) and exhaust funnel (15), dross (7), clean out the dust and dross and go back to cutting, assured the environment safety of the cutting area.

There is vibration dampening system (16) at the bottom of the platform (3), so it can reduce vibration. There is a muffler (17) at the exit of exhaust fan (4) that on the plantform (3).

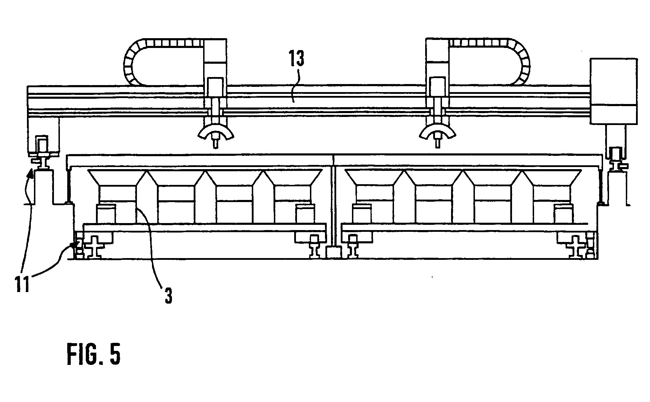

Refer to the attached drawing 5, the control synchronizers (11) includes rack which is installed on the longitudinal track (1) the drives using encoder, with all encoders having the same count, to ensure the exact positioning of the platform (3) to the cutting machine (13).

The electric control of this system has a manual control mode and automatic control mode. Manual control mode is used in installation and adjusting, cleaning up dust and maintenance, use the manual control switch to select the speed of the platform by directly control on the drive system, forward or rearward.

Automatic control mode uses closed loop control technology, which in the process of cutting, controls the platform to move following the cutting torch, clean out the powder dust and dross which is produced during the cutting. The process of control is as follows:

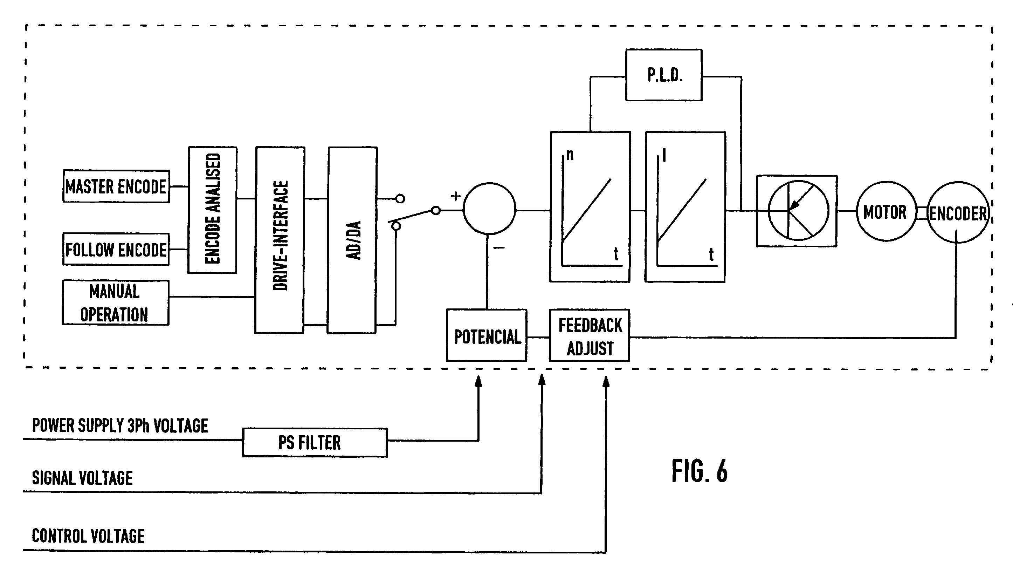

Motor Encoder receives signal from master encoder of cutting machine and slave encoder of fume collector platform, compares the singals and adjusts the platform movement to coincide with the cutting machine movement. The control also ensures that the blowback system operates when the filter monitoring equipment reaches the specified set point. See attached drawing 6.

Under-board Follow-up Fume Collection System is equipped with various safety protection functions, for example: overcurrent protection, over voltage protection, low voltage protection, overtravel, and overproof protection, etc., when protection function is activated for any items of servo drive system, the drive system will be automatically stopped give the alarm warning.

## Claims

1. Under-board Follow-up Fume Collection System having a set of rails known as the longitudinal track with a motorized platform selling on the rails, the platform has a set of funnel lines to catch slag and heavies than air particles and an exhaust fan to draw all fumes into the lines, filters are located on the platform to trap the particles that do not fall to the bottom of the lines, the platform also has a muffler and a holdback filter cleaning system, the control has two modes manual and automatic and synchronizer movement of the platform with the machine above by encoder Signal from both machine.

2. A system as claimed in claim 1, wherein
there is absorber system at the bottom of platform.

3. A system as claimed in claim 1, wherein
there is muffler attached to exhaust fan on the platform.

4. A system as claimed in claim 1, wherein
there is dust system which contains cylinders, baffles, doors that are operated by cylinder.

5. A system as claimed in claim 1, wherein
the control synchronizers the drives using encoder, with all encoders having the same count, to ensure the exact positioning of the platform to the cutting machine.
